# EUROPEAN PATENT APPLICATION

(11) **EP 4 844 962 A1**
(43) Date of publication of application: **25.11.2026**
(21) Application number: 26178304.7
(22) Date of filing: 12.05.2026
(51) Int. Cl.: H01R 43/26

(54) **WORK ASSIST SYSTEM**

(30) Priority: 19.05.2025 JP 2025083083
(71) Applicant: Toyota Jidosha Kabushiki Kaisha, Toyota-shi, Aichi-ken 471-8571 (JP)
(72) Inventor: OJIMA, Kenji, TOYOTA-SHI, AICHI-KEN, 471-8571 (JP)
(74) Representative: Cabinet Beau de Loménie

(57) **Abstract**

This work assist system (10) includes: an acquisition unit (310) that acquires a detection result of a sensor (110, 120, 220) that detects a physical quantity related to fitting work of fitting connectors with each other; and a determination unit (320) that determines using the detection result of the sensor whether or not erroneous fitting of trying to fit a wrong pair of connectors with each other during the fitting work is occurring.

## Description

### BACKGROUND

### FIELD

The present disclosure relates to a work assist system.

### RELATED ART

There is known a technique of detecting that a correct pair of connectors have normally fitted, using an audio signal acquired by a microphone (e.g., JP 2022-108326 A).

### Patent Literature 1: JP 2022-108326 A

The conventional technique can detect that a correct pair of connectors have fitted with each other, yet cannot detect that erroneous fitting of trying to fit a wrong pair of connectors with each other is occurring.

### SUMMARY

The present disclosure can be implemented as following aspects.
(1) One aspect according to the present disclosure provides a work assist system. This work assist system includes: an acquisition unit that acquires a detection result of a sensor that detects a physical quantity related to fitting work of fitting connectors with each other; and a determination unit that determines using the detection result of the sensor whether or not erroneous fitting of trying to fit a wrong pair of connectors with each other during the fitting work is occurring.
   The work assist system according to this aspect can detect that erroneous fitting is occurring.
(2) In the work assist system according to the above aspect, the sensor may be a pressure sensor that detects a pressure produced during the fitting work, or a microphone that detects a sound produced during the fitting work, and the determination unit may determine whether or not the erroneous fitting is occurring, using a machine learning model that has learned in advance the pressure or the sound at a time when the erroneous fitting has occurred.
   The work assist system according to this aspect can accurately detect that erroneous fitting is occurring.
(3) The work assist system according to the above aspect may further include a broadcasting unit that, when the determination unit determines that the erroneous fitting is occurring, broadcasts that the erroneous fitting is occurring, to a worker who is performing the fitting work.
   The work assist system according to this aspect can broadcast to workers that erroneous fitting is occurring.
(4) The work assist system according to the above aspect may further include a wearable device that is attached to the worker and that has an actuator to give a stimulus to a tactile sense of the worker, and the broadcasting unit may broadcast that the erroneous fitting is occurring, to the worker by driving the actuator.
   The work assist system according to this aspect can cause workers to recognize via tactile senses of the workers that erroneous fitting is occurring.
(5) The work assist system according to the above aspect may further include a wearable device that is attached to the worker and that includes a display, and the broadcasting unit may broadcast that the erroneous fitting is occurring, to the worker by displaying a video image on the display.
   The work assist system according to this aspect can cause workers to recognize via visual senses of the workers that erroneous fitting is occurring.
   The present disclosure can be also implemented by various aspects other than the work assist system. For example, the present disclosure can be implemented as aspects such as a work assist method, a computer program, and a recording medium having the computer program recorded thereon.

### BRIEF DESCRIPTION OF THE DRAWINGS

FIG. 1 is an explanatory view illustrating a configuration of a work assist system;
FIG. 2 is an explanatory view illustrating how fitting work is performed;
FIG. 3 is a flowchart illustrating a procedure of erroneous fitting detection processing according to the first embodiment;
FIG. 4 is an explanatory view illustrating a pressure waveform at a time of erroneous fitting;
FIG. 5 is a flowchart illustrating a procedure of erroneous fitting detection processing according to a second embodiment; and
FIG. 6 is a flowchart illustrating a procedure of erroneous fitting detection processing according to a third embodiment.

### DETAILED DESCRIPTION

### A. First Embodiment:

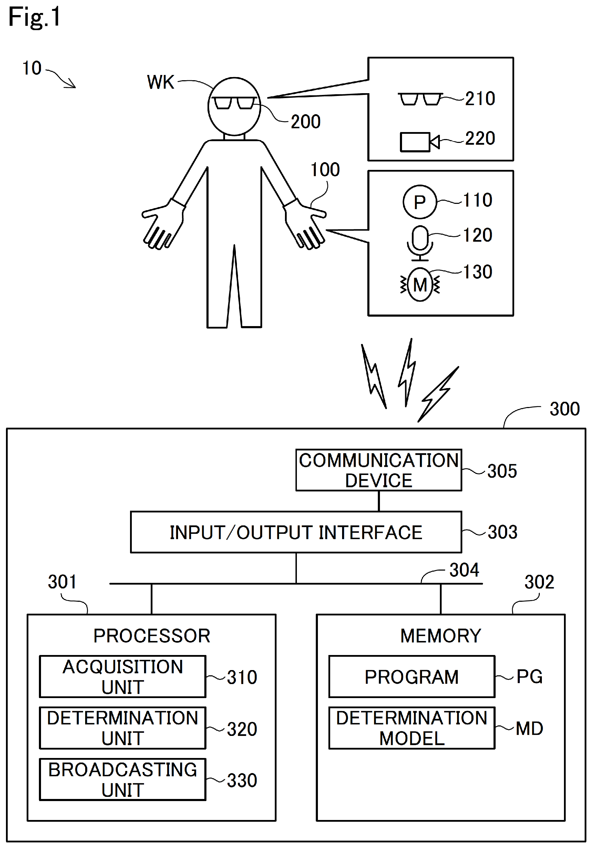

FIG. 1 is an explanatory view illustrating a configuration of a work assist system 10 according to the first embodiment. The work assist system 10 assists fitting work that is work of fitting connectors with each other. The work assist system 10 includes sensor gloves 100, smart glasses 200, and a determination device 300.

The sensor gloves 100 are wearable devices that are attached to hands of a worker WK who performs fitting work. In the present embodiment, the sensor glove 100 includes a pressure sensor 110, a microphone 120, and an actuator 130. A main body part of the sensor glove 100 is attached to the hand of the worker WK. The main body part of the sensor glove 100 is formed to cover fingers one by one. The pressure sensor 110, the microphone 120, and the actuator 130 are fixed to the main body part of the sensor glove 100. The sensor glove 100 includes an unillustrated communication device, and can communicate with the determination device 300 by wireless communication.

The pressure sensor 110 is used as a sensor for detecting a pressure to be applied to the fingers of the worker WK during the fitting work. In the present embodiment, the pressure sensor 110 is formed of a pressure-sensitive conductive sheet that is a sheet-like member whose electrical resistance changes according to the pressure. The pressure sensor 110 is connected to the determination device 300 by wireless communication. A detection result of the pressure sensor 110 is transmitted to the determination device 300 in real time.

The microphone 120 is used as a sensor for detecting a sound produced during fitting work. The microphone 120 is connected to the determination device 300 by wireless communication. A detection result of the microphone 120 is transmitted to the determination device 300 in real time.

The actuator 130 is used to give a stimulus to the tactile sense of the worker WK. The actuator 130 drives in response to an instruction from the determination device 300. In the present embodiment, the actuator 130 is a vibration motor that drives to cause vibration. In this regard, the actuator 130 may be an actuator that drives to extend or contract or an actuator that drives to bend. The actuator 130 is connected to the determination device 300 by wireless communication.

The smart glasses 200 is a wearable device that is attached to the head of the worker WK who performs fitting work. In the present embodiment, the smart glasses 200 includes a display 210 and a camera 220. A main body part of the smart glasses 200 is attached to the head of the worker WK. The display 210 and the camera 220 are fixed to the main body part of the smart glasses 200. The smart glasses 200 includes an unillustrated communication device, and can communicate with the determination device 300 by wireless communication.

The display 210 displays a video image in response to an instruction from the determination device 300. The display 210 is a transmissive display disposed right in front of the eyes of the worker WK. In this regard, the display 210 may be a retinal projection display that projects a video image on retinas of the worker WK. The display 210 is connected to the determination device 300 by wireless communication.

The camera 220 is used as a sensor for detecting a connector located in a visual field of the worker WK during the fitting work. The camera 220 is connected to the determination device 300 by wireless communication. A detection result of the camera 220 is transmitted to the determination device 300 in real time.

The determination device 300 is disposed at a place apart from the worker WK who performs fitting work. The determination device 300 is configured with a computer. The determination device 300 includes a processor 301, a memory 302, an input/output interface 303, and an internal bus 304. The processor 301, the memory 302, and the input/output interface 303 are connected bidirectionally communicably via the internal bus 304. In the present embodiment, the determination device 300 further includes a communication device 305. The communication device 305 is connected to the input/output interface 303. The communication device 305 can communicate with the sensor gloves 100 and the smart glasses 200 by wireless communication.

The processor 301 functions as an acquisition unit 310, a determination unit 320, and a broadcasting unit 330 by executing a computer program PG stored in advance in the memory 302. The acquisition unit 310 acquires a detection result of at least one of the sensors 110, 120, and 220 included in the work assist system 10.

The determination unit 320 determines whether or not erroneous fitting is occurring during fitting work, using the detection result of at least one of the sensors 110, 120, and 220 acquired by the acquisition unit 310. Erroneous fitting means fitting a wrong pair of connectors with each other during the fitting work. In the present embodiment, the determination unit 320 determines whether or not erroneous fitting is occurring, using a determination model MD stored in advance in the memory 302. The determination model MD is a machine learning model that is trained in advance to, when the detection result of at least one of the sensors 110, 120, and 220 included in the work assist system 10 is input, output a determination result indicating whether or not erroneous fitting is occurring. The determination model MD is trained in advance by supervised learning that uses, for example, a training data set including training data and correct labels. The determination model MD is configured with, for example, a neural network. For the determination model MD, parameters such as weights are adjusted by, for example, a backpropagation method.

When the determination unit 320 determines that erroneous fitting is occurring, the broadcasting unit 330 broadcasts that the erroneous fitting is occurring, to the worker WK who is performing the fitting work. The broadcasting unit 330 broadcasts to the worker WK that the erroneous fitting is occurring during the fitting work by performing at least one of driving the actuators 130 provided to the sensor gloves 100 and displaying a video image on the display 210 provided to the smart glasses 200. The video image that the display 210 is caused to display may be a still image or may be a moving image. The video image that the display 210 is caused to display may include, for example, a message indicating that erroneous fitting is occurring, or may include an illustration illustrating that erroneous fitting is occurring.

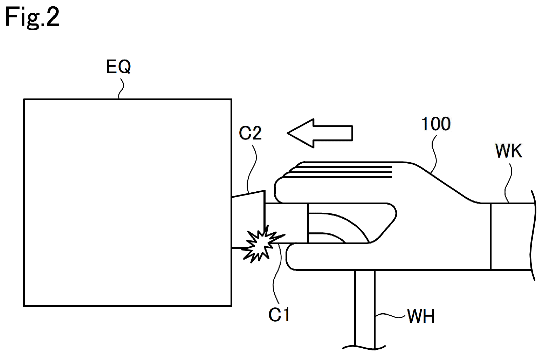

FIG. 2 is an explanatory view illustrating how fitting work of fitting a pair of connectors is performed. The pair of connectors include a plug connector and a receptacle connector. In the following description, in a case where the plug connector and the receptacle connector is described without being distinguished in particular, the plug connector and the receptacle connector will be referred to simply as a connector. The pair of connectors are provided with a lock mechanism that fixes the plug connector and the receptacle connector to each other. The lock mechanism includes, for example, a claw part that is provided to one of the plug connector and the receptacle connector, and a groove part that is provided to the other one of the plug connector and the receptacle connector. When the plug connector is sufficiently inserted into the receptacle connector, the claw part is caught in the groove part and thereby the lock mechanism works to firmly fix the plug connector and the receptacle connector. When the lock mechanism works, a clicking sound and a click reaction force are produced from the connectors.

FIG. 2 illustrates an example where a connector C1 provided to one end of a wire harness WH is fitted to a connector C2 provided to an electronic equipment EQ. In FIG. 2, the connector C2 is disposed in front of the electronic equipment EQ as viewed from the worker WK who is gripping the connector C1. In this regard, the connector C2 may be disposed on one of the back, left, right, upper, and lower sides of the electronic equipment EQ as viewed from the worker WK who is gripping the connector C1. In a case where the connector C1 and the connector C2 are a correct pair, the connector C1 and the connector C2 fit by inserting the connector C1 into the connector C2. At this time, when the lock mechanism works, a clicking sound and a click reaction force are produced from the connectors C1 and C2.

However, in a case where the connector C1 and the connector C2 are a wrong pair, even if fitting the connector C1 and the connector C2 is tried, the connector C1 and the connector C2 do not fit. In the case where the connector C1 and the connector C2 are a wrong pair, a reaction force different from the click reaction force is produced at the fingers of the worker WK when the connector C1 and the connector C2 collide. For example, a reaction force of a predetermined magnitude or more is produced for a predetermined time or more. In addition, in the case where the connector C1 and the connector C2 are a wrong pair, a sound different from the clicking sound is produced from the connectors C1 and C2 when the connector C1 and the connector C2 collide. For example, collision sounds with different amplitudes and frequencies from the clicking sound are produced a plurality of times.

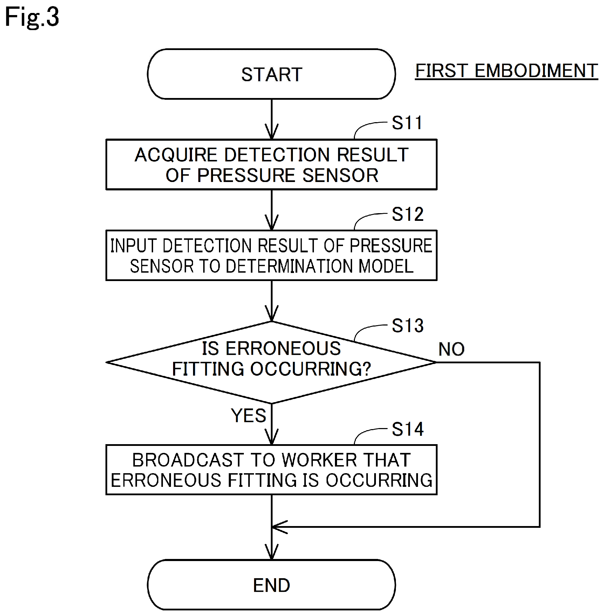

FIG. 3 is a flowchart illustrating a procedure of erroneous fitting detection processing according to the present embodiment; The erroneous fitting detection processing is repeatedly executed at a predetermined cycle by the determination device 300. The determination device 300 starts the erroneous fitting detection processing when, for example, the worker WK executes a predetermined start operation.

In step S11, the acquisition unit 310 acquires a detection result of the pressure sensor 110. In the present embodiment, the detection result of the pressure sensor 110 is time-series data of pressure. The pressure indicated by the time-series data of the pressure corresponds to a "physical quantity related to fitting work" in the present disclosure.

In step S12, the determination unit 320 inputs to the determination model MD the time-series data of the pressure that is the detection result of the pressure sensor 110, and acquires a determination result output from the determination model MD. In the present embodiment, the determination model MD learns in advance the pressure at a time when erroneous fitting occurs. When the time-series data of the pressure is input, the determination model MD outputs the determination result indicating whether or not erroneous fitting is occurring.

In step S13, the determination unit 320 determines whether or not erroneous fitting is occurring. In the present embodiment, the determination unit 320 determines that erroneous fitting is occurring when the determination result indicating that the erroneous fitting is occurring is output from the determination model MD, and determines that the erroneous fitting is not occurring when the determination result indicating that the erroneous fitting is not occurring is output from the determination model MD. If it is determined in step S13 that the erroneous fitting is not occurring, the determination device 300 skips step S14, and ends the erroneous fitting detection processing. In a case where it has been determined in step S13 that the erroneous fitting is occurring, the determination device 300 moves the processing to step S14.

In step S14, the broadcasting unit 330 broadcasts to the worker WK that the erroneous fitting is occurring. In the present embodiment, the broadcasting unit 330 broadcasts to the worker WK that the erroneous fitting is occurring by vibrating the actuators 130 of the sensor gloves 100 and displaying a video image indicating the erroneous fitting on the display 210 of the smart glasses 200. Thereafter, the determination device 300 ends the erroneous fitting detection processing. The determination device 300 repeatedly executes the erroneous fitting detection processing at a predetermined cycle until, for example, the worker WK executes a predetermined end operation.

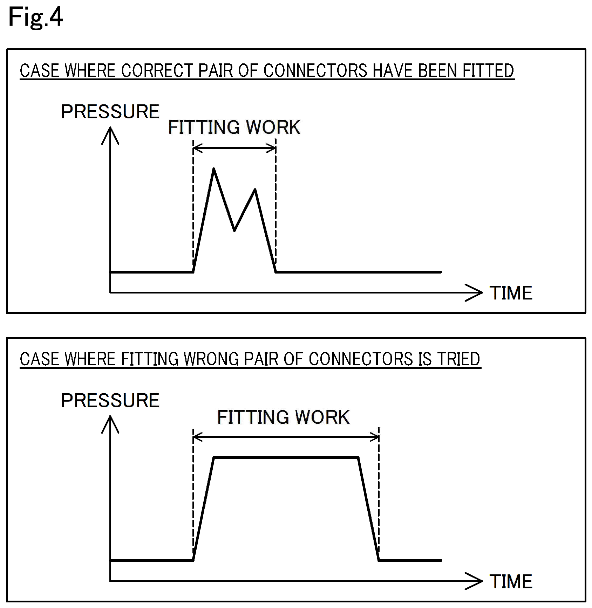

FIG. 4 is an explanatory view illustrating a waveform of a pressure to be applied to the fingers of the worker WK. When the correct pair of the connectors are fitted with each other, the pressure to be applied to the fingers of the worker WK increases at a time of start of insertion of the connector, decreases during insertion of the connector, increases when the lock mechanism works, and then decreases when fitting work is completed. By contrast with this, when fitting a wrong pair of the connectors with each other is tried, the pressure to be applied to the fingers of the worker WK maintains for a certain period of time a state where the pressure is relatively high when the unfitting connectors are pressed against each other, and decreases when fitting work is interrupted.

The work assist system 10 according to the above-described present embodiment can detect that erroneous fitting of trying to fit a wrong pair of the connectors with each other is occurring, using the detection results of the pressure sensors 110 provided to the sensor gloves 100.

Furthermore, in the present embodiment, the determination unit 320 determines whether or not erroneous fitting is occurring, using the detection result of the pressure sensor 110 and the determination model MD. Consequently, it is possible to accurately determine whether or not erroneous fitting is occurring.

Furthermore, in the present embodiment, when the determination unit 320 determines that erroneous fitting is occurring, the broadcasting unit 330 broadcasts to the worker WK that the erroneous fitting is occurring. Consequently, the worker WK can recognize early that the worker WK is trying to fit a wrong pair of connectors with each other. Accordingly, the worker WK can prevent time from wastefully passing by trying to fit the wrong pair of connectors with each other, and prevent the connectors from being damaged. Particularly when a fitting destination connector for a connector gripped by the worker WK is located at a position difficult to see by the worker WK, the worker WK has difficulty in visually checking whether or not a pair of the connectors is correct. In view of this problem, according to the present embodiment, even when a fitting destination connector is located at a position difficult to see by the worker WK, the broadcasting unit 330 enables the worker WK to recognize early that a pair of connectors is wrong.

Furthermore, in the present embodiment, the broadcasting unit 330 broadcasts to the worker WK that the erroneous fitting is occurring by vibrating the actuators 130 provided to the sensor gloves 100. Consequently, it is possible to cause the worker WK to recognize via the tactile sense of the worker WK that erroneous fitting is occurring. Accordingly, even under environments with large sounds in the surroundings, it is possible to cause the worker WK to recognize that erroneous fitting is occurring.

Furthermore, in the present embodiment, the broadcasting unit 330 broadcasts to the worker WK that the erroneous fitting is occurring also by displaying a video image on the display 210 provided to the smart glasses 200. Consequently, it is possible to cause the worker WK to recognize via the visual sense of the worker WK that erroneous fitting is occurring. Accordingly, it is possible to cause the worker WK to easily recognize that erroneous fitting is occurring.

### B. Second Embodiment:

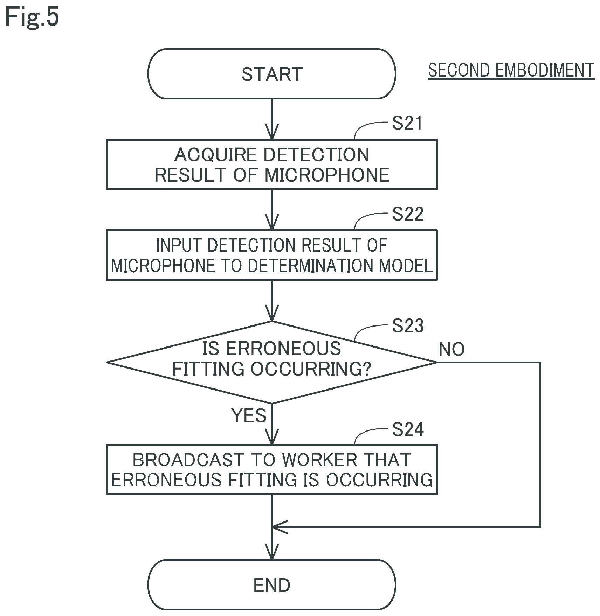

FIG. 5 is a flowchart illustrating a procedure of erroneous fitting detection processing executed by the work assist system 10 according to the second embodiment. The second embodiment differs from the first embodiment in that the work assist system 10 determines whether or not erroneous fitting is occurring using a detection result of the microphone 120 instead of a detection result of the pressure sensor 110. The other points are the same as those in the first embodiment unless otherwise described in particular.

In step S21, the acquisition unit 310 acquires the detection result of the microphone 120. In the present embodiment, the detection result of the microphone 120 is time-series data of sound. An amplitude and a frequency indicated by the time-series data of the sound correspond to "physical quantities related to fitting work" in the present disclosure.

In step S22, the determination unit 320 inputs to the determination model MD the time-series data of the sound that is the detection result of the microphone 120, and acquires a determination result output from the determination model MD. In the present embodiment, the determination model MD learns in advance the sound at a time when erroneous fitting occurs. When the time-series data of the sound is input, the determination model MD outputs the determination result indicating whether or not erroneous fitting is occurring.

In step S23, the determination unit 320 determines whether or not erroneous fitting is occurring. The determination unit 320 determines that erroneous fitting is occurring when the determination result indicating that the erroneous fitting is occurring is output from the determination model MD, and determines that the erroneous fitting is not occurring when the determination result indicating that the erroneous fitting is not occurring is output from the determination model MD.

If it is determined in step S23 that the erroneous fitting is not occurring, the determination device 300 skips step S24, and ends the erroneous fitting detection processing. In a case where it is determined in step S23 that erroneous fitting is occurring, the broadcasting unit 330 broadcasts to the worker WK that the erroneous fitting is occurring in step S24. Thereafter, the determination device 300 ends the erroneous fitting detection processing.

The work assist system 10 according to the above-described present embodiment can detect that erroneous fitting caused by fitting a wrong pair of connectors with each other is occurring, using the detection result of the microphones 120 provided to the sensor gloves 100.

### C. Third Embodiment:

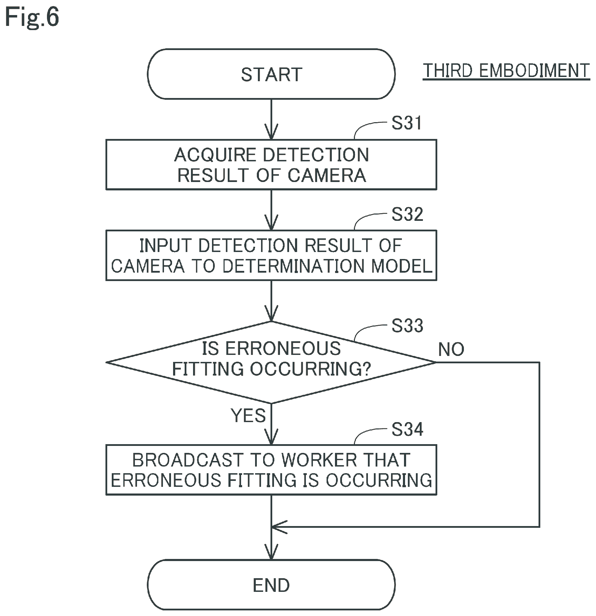

FIG. 6 is a flowchart illustrating a procedure of erroneous fitting detection processing executed by the work assist system 10 according to the third embodiment. The present embodiment differs from the first embodiment in that the work assist system 10 determines whether or not erroneous fitting is occurring using a detection result of the camera 220. The other points are the same as those in the first embodiment unless otherwise described in particular.

In step S31, the acquisition unit 310 acquires a detection result of the camera 220. The detection result of the camera 220 is an image. The image may be a still image, or may be a moving image. The image includes a brightness value of light reflected by the surface of a connector, and the like. The brightness value included in the image corresponds to a "physical quantity related to fitting work" in the present disclosure.

In step S32, the determination unit 320 inputs to the determination model MD an image that is the detection result of the camera 220, and acquires a determination result output from the determination model MD. In the present embodiment, the determination model MD discriminates types of connectors in an image by object recognition when the image is input. The determination model MD outputs the determination result indicating that erroneous fitting is not occurring when the types of the connectors are the same, and outputs the determination result indicating that erroneous fitting is occurring when the types of the connectors are different.

In step S33, the determination unit 320 determines whether or not erroneous fitting is occurring. The determination unit 320 determines that erroneous fitting is occurring when the determination result indicating that the erroneous fitting is occurring is output from the determination model MD, and determines that the erroneous fitting is not occurring when the determination result indicating that the erroneous fitting is not occurring is output from the determination model MD.

If it is determined in step S33 that the erroneous fitting is not occurring, the determination device 300 skips step S34, and ends the erroneous fitting detection processing. In a case where it is determined in step S33 that erroneous fitting is occurring, the broadcasting unit 330 broadcasts to the worker WK that the erroneous fitting is occurring in step S34. Thereafter, the determination device 300 ends the erroneous fitting detection processing.

The work assist system 10 according to the above-described present embodiment can detect that erroneous fitting of trying to fit a wrong pair of connectors with each other is occurring, using the detection result of the camera 220 provided to the smart glasses 200. In the present embodiment in particular, it is possible to detect that erroneous fitting is occurring, even before the connectors contact each other.

### D. Other Embodiments:

(D1) In the work assist system 10 according to each of the above embodiments, the determination unit 320 determines whether or not erroneous fitting is occurring, using the determination model MD that is the machine learning model. By contrast with this, the determination unit 320 may determine whether or not erroneous fitting is occurring using a rule-based model. The rule-based model is configured to determine that erroneous fitting is occurring when, for example, the magnitude of pressure exceeds a predetermined threshold. The rule-based model may be configured to determine that erroneous fitting is occurring when a sound of a predetermined frequency range is detected.

(D2) In the work assist system 10 according to each of the above embodiments, the broadcasting unit 330 broadcasts to the worker WK that erroneous fitting is occurring by performing both of driving the actuators 130 provided to the sensor gloves 100 and displaying a video image on the display 210 provided to the smart glasses 200. By contrast with this, the broadcasting unit 330 may broadcast to the worker WK that the erroneous fitting is occurring by performing one of driving the actuators 130 provided to the sensor gloves 100 and displaying a video image on the display 210 provided to the smart glasses 200. Furthermore, the broadcasting unit 330 may broadcast to the worker WK that the erroneous fitting is occurring by driving an actuator provided to a wearable device other than the sensor gloves 100. When, for example, an actuator is provided to a workwear worn by the worker WK, the broadcasting unit 330 may broadcast to the worker WK that the erroneous fitting is occurring by driving the actuators provided to the workwear.

(D3) The work assist system 10 according to each of the above embodiments includes the broadcasting unit 330. By contrast with this, the work assist system 10 may not include the broadcasting unit 330. In this case, a determination result of the determination unit 320 may be recorded in, for example, the memory 302 of the determination device 300, and used for improvement of fitting work.

(D4) The work assist system 10 according to the above first embodiment and second embodiment may not include the smart glasses 200. According to this aspect, it is also possible to execute detection of erroneous fitting and broadcasting of erroneous fitting using the sensor gloves 100.

(D5) The work assist system 10 according to the above third embodiment may not include the sensor gloves 100. According to this aspect, it is also possible to execute detection of erroneous fitting and broadcasting of erroneous fitting using the smart glasses 200.

(D6) In the work assist system 10 according to each of the above embodiments, the determination device 300 is disposed at a place apart from the worker WK. By contrast with this, the determination device 300 may be configured as, for example, a mobile terminal, and attached to the worker WK. The determination device 300 may be configured to communicate with the sensor gloves 100 and the smart glasses 200 by wired communication.

(D7) In the work assist system 10 according to each of the above embodiments, the acquisition unit 310 may acquire detection results of at least two of the pressure sensor 110, the microphone 120, and the camera 220, and the determination unit 320 may determine whether or not erroneous fitting is occurring using the at least two detection results acquired by the acquisition unit 310.

The present disclosure is not limited to the above-described embodiments, and can be implemented by various configurations without departing from the gist of the present disclosure. For example, technical features in the embodiments corresponding to technical features in each aspect described in the summary can be replaced or combined as appropriate to solve part or all of the above-described problems or achieve part or all of the above-described effects. Furthermore, the technical features that are not described as indispensable in this description can be deleted as appropriate.

## Claims

1. A work assist system (10) comprising:
an acquisition unit (310) configured to acquire a detection result of a sensor (110;120;220) used for detecting a physical quantity related to fitting work of fitting connectors with each other; and
a determination unit (320) configured to determine by using the detection result of the sensor (110, 120, 220) whether or not erroneous fitting of trying to fit a wrong pair of connectors with each other during the fitting work is occurring.

2. The work assist system (10) according to claim 1, wherein
the sensor is a pressure sensor (110) detecting a pressure produced during the fitting work, or a microphone (120) detecting a sound produced during the fitting work, and
the determination unit (320) determines whether or not the erroneous fitting is occurring, using a machine learning model (MD) having learned in advance the pressure or the sound at a time when the erroneous fitting has occurred.

3. The work assist system (10) according to claim 1 or 2, further comprising a broadcasting unit (330) configured to broadcast, when the determination unit (320) determines the occurrence of erroneous fitting, the occurrence of erroneous fitting, to a worker (WK) performing the fitting work.

4. The work assist system (10) according to claim 3, further comprising a wearable device (100) attached to the worker (WK), wherein the wearable device (100) includes an actuator (130) for giving a stimulus to a tactile sense of the worker (WK),
wherein the broadcasting unit (330) broadcasts the occurrence of erroneous fitting, to the worker (WK) by driving the actuator (130).

5. The work assist system (10) according to claim 3 or 4, further comprising a wearable device (200) attached to the worker (WK), wherein the wearable device (200) includes a display (210),
wherein the broadcasting unit (330) broadcasts the occurrence of erroneous fitting, to the worker (WK) by displaying a video image on the display (210).
